# EUROPEAN PATENT SPECIFICATION

(11) **EP 1 726 835 B1**
(45) Date of publication and mention of the grant of the patent: **11.06.2008**
(21) Application number: 06113417.7
(22) Date of filing: 03.05.2006
(51) Int. Cl.: F16B 7/18, F16B 12/50

(54) **Device for mutually connecting an upright and at least two cross-members converging thereat, particularly for supporting frames**
Einrichtung zum gegenseitigen Verbinden eines Ständers und wenigstens zwei dagegen gerichtete Querriegel, insbesondere für Traggestelle
Dispositif de connexion mutuelle d'un montant et d'au moins deux traverses convergeant vers lui, notamment pour des structures de support

(30) Priority: 24.05.2005 IT PD20050151
(43) Date of publication of application: 29.11.2006
(73) Proprietor: UNOX S.R.L., 35010 Vigodarzere (PD) (IT)
(72) Inventor: Franzolin, Enrico, 35010 Vigodarzere (PD) (IT)
(74) Representative: Modiano, Micaela Nadia

(56) References cited:
- DE-A1- 19 526 760
- DE-U1-8202004 009 88
- GB-A- 1 285 411
- US-A- 2 877 602
- US-A- 3 887 288

## Description

The present invention relates to a device for mutually connecting an upright and at least two cross-members converging thereat, particularly for supporting frames.

The present invention also relates to a supporting frame assembled by means of a series of such connecting devices.

Large food ovens, such as for example ovens for bakeries, confectioner's shops, delicatessens, or for refreshment bars and the like, in order to be better accessible by a user, are supported by supporting frames, which are adapted to lift them to such a height so as to spare the user from bending down repeatedly to extract the plurality of trays contained in the oven.

Moreover, such supporting frames, if provided with wheels, allowing easy movement of the one or more supported ovens.

An oven supported by a frame is also better ventilated, with a consequent lower accumulation of heat in the room where the oven is installed.

Currently known supporting frames are constituted generally by four tubular uprights which rest on the ground.

Such uprights are mutually connected by a first series of upper cross-members and by at least one second series of lower cross-members.

In one of the main types of frame, the ends of each cross-member are fixed to the uprights by means of welding operations, which in addition to being expensive and requiring a certain production time and specialized labor, deform the uprights and cross-members, to the detriment of the stability and durability of the frame.

Another type of frame has, at the ends of the uprights, a plastics element which is contoured so as to form seats for the insertion of the ends of the cross-members.

Such plastics elements, in addition to constituting an extra cost during production, are in any case insufficient to ensure the solidity of the frame, which has to be improved by using auxiliary diagonal reinforcement braces between one upright and the other.

Frame connection examples are available from documents GB-1 285 411 and DE-19526760.

The aim of the present invention is to provide a device for mutually connecting an upright and at least two cross-members converging thereat, particularly for supporting frames, according to the invention, that has the features set forth in claim 1.

Within this aim, an object of the present invention is to provide a supporting frame which is assembled by means of connecting devices according to claim 10.

Another object of the present invention is to provide a frame which can be assembled easily without resorting to expensive welding operations.

Another object of the present invention is to provide a frame the solidity and load-bearing capacity of which are at least equal to those of known types of frame despite the absence of auxiliary diagonal braces.

A further object of the present invention is to provide a connecting device, and therefore a supporting frame, which can be assembled easily even by a user who does not possess particular prior training.

A still further object of the present invention is to provide a connecting device, and accordingly a supporting frame, which can be manufactured cheaply with known systems and technologies.

This aim and these and other objects, which will become better apparent hereinafter, are achieved by a device according to claim 1.

Advantageously, a supporting frame, of the type constituted by four tubular uprights which rest on the ground and are mutually connected by a first series of upper cross-members and by at least one second series of lower cross-members, is characterized in that the ends of said cross-members are fixed in pairs to said uprights by means of corresponding connecting devices according to the invention.

Further characteristics and advantages of the invention will become better apparent from the following detailed description of a preferred but not exclusive embodiment thereof, illustrated by way of non-limiting example in the accompanying drawings, wherein:

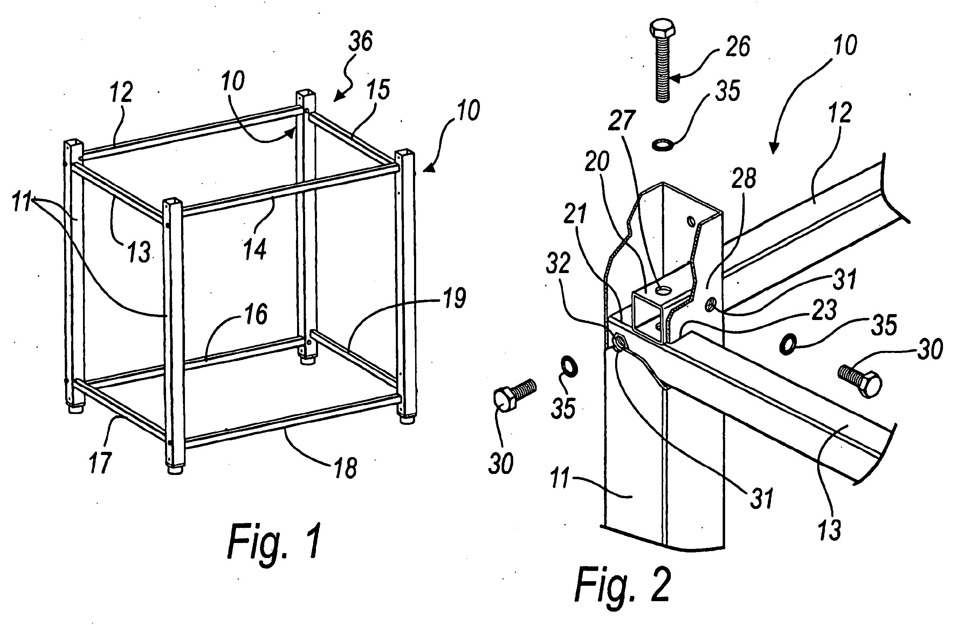

Figure 1 is an assembled perspective view of a supporting frame according to the invention;
Figure 2 is a partially sectional perspective view of a connecting device according to the invention;
Figure 3 is a partially exploded perspective view of a frame according to the invention;
Figure 4 is a sectional side view of the connecting device of Figure 2.

With reference to the figures, a device for mutually connecting an upright and at least two cross-members converging thereat, according to the invention, is generally designated by the reference numeral 10.

The device 10, in the embodiment described herein, acts between an upright 11 and two cross-members converging thereat, designated by the reference numerals 12 and 13 respectively.

The ends, respectively 20 and 21, of the two cross-members 12 and 13 are each inserted within the upright 11 through a corresponding complementarily shaped opening 22 and 23.

The ends 20 and 21 are superimposed and crossed within the upright 11.

The first end 20 of the first cross-member 12, which is arranged upward, is provided with a through hole 27 for a stem 26a of a threaded element 26.

The second end 21 of the second cross-member 13, which is arranged downward, is provided with a female thread element 25 for fixing the threaded element 26.

The threaded element 26 is adapted to lock the first end 20 to the second end 21.

Each of the two ends 20 and 21 is in turn fixed, by way of connecting means, to an adjacent lateral portion 28 of the upright 11.

Said connecting means are of the threaded type.

The threaded connecting means are constituted, for each of the ends 20 and 21 of the cross-members 12 and 13, by a screw 30, which passes through by means of corresponding facing holes 31 and 32, whose axis lies transversely both to the longitudinal axis of the upright 11 and to the longitudinal axis of the cross-member to which the end belongs.

A first hole 31 is open in the upright portion 28 and a second hole 32 is open on the end 20 or 21 to be fixed.

The screw 30 is screwed to an additional female thread element, which is fixed inside the end 20 or 21 at the second hole 32.

Such female thread element is constituted by an internally threaded insert 33, which is forced in the respective hole 32, which has a hexagonal cross-section, and is deformed plastically at its outer flaps for stable fixing to the hole 32.

The screws are associated with washers 35.

The first end 20 and the second end 21 are inserted within the upright 11 until they abut with their tip against the internal wall 29 of the upright.

In the embodiment of the invention described herein, the tubular upright 11 has a substantially square cross-section.

The cross-members 12 and 13 also are tubular and also have a square cross-section, the side of which is shorter than the side of the cross-section of the upright 11.

Again in the present embodiment, the female thread element 25 is constituted by an internally threaded bush, which is welded inside the second end 21.

As an alternative to the bush, the female thread element 25 can be constituted by an insert which is conveniently threaded complementarily with respect to the screw or by a nut which is fixed by means of a spot weld.

The second end 21 has a hole 24 for the threaded element 26, which faces the first overlying end 20.

The hole 24 allows the threaded element 26 to access the female thread element 25.

The invention also relates to a supporting frame 36, of the type constituted by four tubular uprights 11, which rest on the ground and are mutually connected by a first series of upper cross-members 12, 13, 14 and 15 and by a second series of lower cross-members 16, 17, 18 and 19.

A device for mutually connecting an upright and at least two cross-members 10 converging thereat according to the invention allows to eliminate welding operations and additional components made of plastic material, which are expensive and fragile.

The device 10 according to the invention combines constructive simplicity with greater sturdiness than known connecting devices and methods.

The ends of the cross-members 12, 13, 14, 15, 16, 17, 18 and 19 are fixed in pairs to the respective uprights 11 by means of corresponding connecting devices 10 as described above.

The sturdiness of the device 10 is such that the frame 36 does not require auxiliary diagonal braces.

Further, the absence of welding beads makes the frame 36 aesthetically more pleasant than known types of supporting frame.

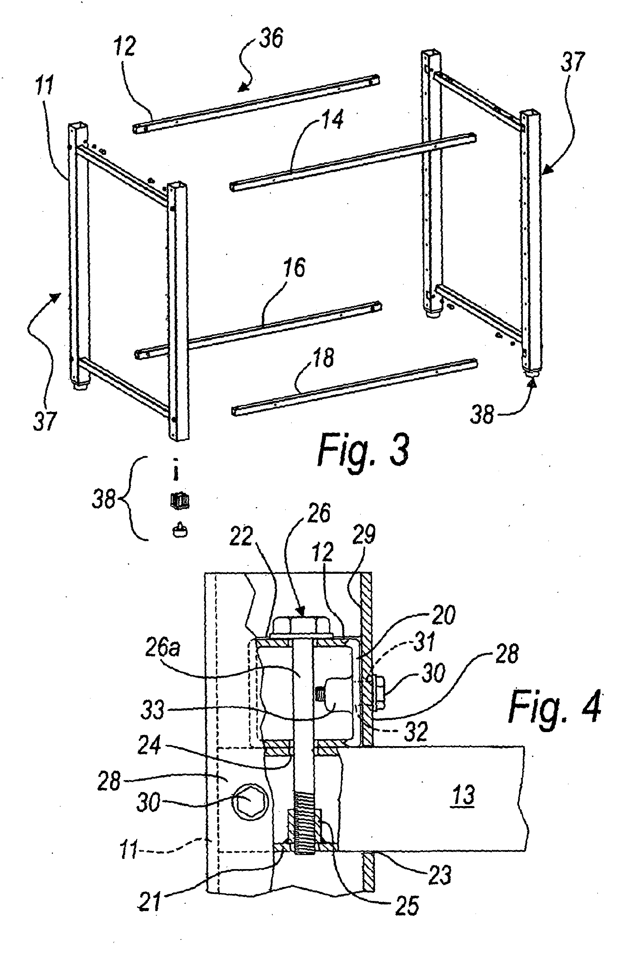

Moreover, the frame 36 can be packaged in a disassembled condition, for example broken down into the parts shown in the exploded view of Figure 3.

Two shoulders 37 can be separated from the cross-members 12, 14, 16 and 18 and from the ground contact feet 38.

The cross-members can be fixed to the uprights easily by means of known types of wrench.

The packaging of the frame 36 in a disassembled condition entails enormous advantages in terms of storage for the manufacturer and in terms of transport.

In practice it has been found that the invention thus described solves the problems noted in the devices and methods for mutually connecting an upright and at least two cross-members converging thereat, particularly for supporting frames of the known type.

In particular, the present invention provides a supporting frame which is assembled by means of said connecting devices according to the invention.

Moreover, the present invention provides a connecting device and a frame which can be assembled easily with a limited number of components with respect to frames of the known type, since elements made of plastic material forming insertion seats for the ends of the cross-members and reinforcement braces are not required.

Further, the present invention provides a connecting device, and accordingly a frame, the solidity and load-bearing capacity of which are not lower than those of known types of frame despite the absence of auxiliary diagonal braces.

Moreover, the present invention provides a device which allows even a user who lacks particular prior training to assemble a frame rapidly.

Moreover, the present invention provides a connecting device, and accordingly a supporting frame, which can be manufactured cheaply with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device, particularly for supporting frames, for mutually connecting an upright (11) that has shaped openings (22, 23) and at least two, first and second cross-members (12, 13) converging thereat with a first and respectively a second end (20, 21) thereof, the device comprising a threaded element (26) and a female thread element (25), **characterized in that** it further comprises connecting means (30, 31) of the threaded type, said shaped openings (22, 23) having a shape that is complementary to the cross-sectional shape of said at least two, first and second cross-members (12,13) for allowing the insertion therethrough of said first and second cross-members (12, 13) so that their respective first and second ends (20, 21) are inserted into and comprised within said upright (11) in superimposed and crossed arrangement, said female thread element (25) being provided at said second end (21) of said second cross-member (13) arranged in a downward position for the fixing of the threaded element (26), said first end (20) of the first cross-member (12), which is arranged upward, being provided with a through hole (27) for the stem (26a) of said threaded element (26) that is adapted to lock said first end (20) to said second end (21), each one of said ends (20, 21) being in turn fixed, by way of said connecting means of the threaded type (30, 31), to an adjacent lateral portion (28) of the upright (11).

2. The device according to claim 1, **characterized in that** said threaded connecting means are constituted, for each of the ends (20, 21) of the cross-members (12, 13), by a screw (30) which passes through a corresponding facing hole (31, 32) whose axis lies transversely both to the longitudinal axis of the upright (11) and to the longitudinal axis of the cross-member (12, 13), to which the end (20, 21) belongs, a first hole (31) on said portion (28) of the upright and a second hole (32) on the end (20, 21) to be fixed, said screw (30) being adapted to be screwed to an additional female thread element (33), which is fixed inside the end (20, 21) at said second hole (32).

3. The device according to claim 2, **characterised in that** said additional female thread element is constituted by an internally threaded insert (33), which is forced within the respective hole (32), has a hexagonal cross-section, and is deformed plastically at outer flaps thereof for stable fixing to said hole (32).

4. The device according to one or more of the preceding claims, **characterized in that** said first end (20) and said second end (21) are inserted within the upright (11) until the tip abuts against an internal wall (29) of said upright (11).

5. The device according to one or more of the preceding claims, **characterized in that** said threaded element (26) is a screw.

6. The device according to one or more of the preceding claims, **characterized in that** said tubular upright (11) has a substantially square cross-section.

7. The device according to one or more of the preceding claims, **characterized in that** said cross-members (12, 13, 14, 15, 16, 17, 18, 19) are tubular.

8. The device according to claim 7, **characterized in that** said tubular cross-members (12, 13, 14, 15, 16, 17, 18, 19) have a square cross-section whose side is shorter than the side of the cross-section of the upright (11).

9. The device according to one or more of the preceding claims, **characterized in that** said female thread element (25) is constituted by an internally threaded bush, which is welded inside said second end (21), said second end (21) having a hole (24) for said threaded element (26), allowing access to said female thread element (25), which faces said overlying first end (20).

10. A supporting frame, of the type constituted by four tubular uprights (11) which rest on the ground and are mutually connected by a first series of upper cross-members (12, 13, 14, 15) and by at least one second series of lower cross-members (16, 17, 18, 19), **characterized in that** the ends of said cross-members (12, 13, 14, 15, 16, 17, 18, 19) are fixed in pairs to said uprights (11) by means of corresponding connecting devices (10) according to one or more of the preceding claims.

## Patentansprüche

1. Eine Vorrichtung, insbesondere für Traggestelle, zum wechselseitigen Verbinden eines Ständers (11), der geformte Öffnungen (22, 23) hat, und mindestens zwei der ersten und zweiten Querträger (12, 13), die dort zusammenlaufen, mit einem ersten bzw. zweiten Ende (20, 21) davon, wobei die Vorrichtung ein mit einem Gewinde versehenes Element (26) und ein mit einem Innengewinde versehenes Element (25) hat, **dadurch gekennzeichnet, dass** sie weiterhin Verbindungsmittel (30, 31) des mit einem Gewinde versehenen Typs umfasst, wobei die geformten Öffnungen (22, 23) eine Form haben, die komplementär zur Querschnittsform der mindestens zwei der ersten und zweiten Querträger (12, 13) haben, um die Einführung **dadurch** der ersten und zweiten Querträger (12, 13) zu gestatten, so dass ihre jeweiligen ersten und zweiten Enden (20, 21) im Ständer (11) eingefügt und innerhalb des Ständers (11) in einer überlagerten und gekreuzten Anordnung enthalten sind, wobei das mit einem Innengewinde versehene Element (25) an dem zweiten Ende (21) des Querträgers (13) bereitgestellt wird, angeordnet in einer unteren Stellung, für die Befestigung des mit einem Gewinde versehenen Elements (26), wobei das erste Ende (20) des ersten Querträgers (12), das oben angeordnet ist, mit einem durchgehenden Loch (27) für den Schaft (26a) des mit einem Gewinde versehenen Elements (26) ausgestattet ist, das ausgebildet ist, um das erste Ende (20) mit dem zweiten Ende (21) zu verriegeln, wobei jedes der Enden (20, 21) seinerseits durch die Verbindungsmittel des mit einem Gewinde versehenen Typs (30, 31) am angrenzenden seitlichen Abschnitt (28) des Ständers (11) befestigt ist.

2. Die Vorrichtung gemäß Anspruch 1, **dadurch gekennzeichnet, dass** die mit einem Gewinde versehenen Verbindungsmittel für jedes der Enden (20, 21) der Querträger (12, 13) aus einer Schraube (30) bestehen, die durch ein entsprechendes gegenüberstehendes Loch (31, 32) hindurch dringt, dessen Achse sowohl zur Längsachse des Ständers (11) als auch zur Längsachse des Querträgers (12, 13), zu dem das Ende (20, 21) gehört, transversal liegt, einem erstem Loch (31) an dem Abschnitt des Ständers (28) und einem zweiten Loch (32) an dem zu befestigenden Ende (20, 21), wobei die Schraube (30) ausgebildet ist, um mit einem zusätzlichen mit einem Innengewinde versehenen Element (33) verschraubt zu werden, das innerhalb des Endes (20, 21) an dem zweiten Loch (32) befestigt ist.

3. Die Vorrichtung gemäß Anspruch 2, **dadurch gekennzeichnet, dass** das mit einem Innengewinde versehene Element aus einem Einsatz (33) mit Innengewinde besteht, der in das entsprechende Loch (32) gedrückt wird, einen sechseckigen Querschnitt hat und zur stabilen Befestigung in dem Loch (32) an seinen äußeren Klappen plastisch verformt wird.

4. Die Vorrichtung gemäß einem oder mehreren der vorstehenden Ansprüche, **dadurch gekennzeichnet, dass** das erste Ende (20) und das zweite Ende (21) in den Ständer (11) eingefügt werden, bis die Spitze gegen die Innenwand (29) des Ständers (11) anstößt.

5. Die Vorrichtung gemäß einem oder mehreren der vorstehenden Ansprüche, **dadurch gekennzeichnet, dass** das mit einem Gewinde versehene Element (26) eine Schraube ist.

6. Die Vorrichtung gemäß einem oder mehreren der vorstehenden Ansprüche, **dadurch gekennzeichnet, dass** der rohrförmige Ständer (11) einen im Wesentlichen quadratischen Querschnitt hat.

7. Die Vorrichtung gemäß einem oder mehreren der vorstehenden Ansprüche, **dadurch gekennzeichnet, dass** die Querträger (12, 13, 14, 15, 16, 17, 18, 19) rohrförmig sind.

8. Die Vorrichtung gemäß Anspruch 7, **dadurch gekennzeichnet, dass** die rohrförmigen Querträger (12, 13, 14, 15, 16, 17, 18, 19) einen quadratischen Querschnitt haben, dessen Seite kürzer ist als die Seite des Querschnitts des Ständers (11).

9. Die Vorrichtung gemäß einem oder mehreren der vorstehenden Ansprüche, **dadurch gekennzeichnet, dass** das mit einem Innengewinde versehene Element (25) aus einer Buchse mit Innengewinde besteht, die in das zweite Ende (21) eingeschweißt ist, wobei das zweite Ende (21) ein Loch (24) für das mit einem Gewinde versehene Element (26) hat, das dem mit einem Innengewinde versehenen Element (25), welches zum darüber liegenden ersten Ende (20) gegenüberliegt, den Zugang ermöglicht.

10. Ein Traggestell von der Art, die aus vier rohrförmigen Ständern (11) besteht, welche auf dem Boden stehen und miteinander durch eine erste Reihe oberer Querträger (12, 13, 14, 15) und mindestens eine zweite Reihe unterer Querträger (16, 17, 18, 19) verbunden sind, **dadurch gekennzeichnet, dass** die Enden der Querträger (12, 13, 14, 15, 16, 17, 18, 19) paarweise durch entsprechende Verbindungsvorrichtungen (10) gemäß einem oder mehreren der vorangehenden Ansprüche an den Ständern (11) befestigt sind.

## Revendications

1. Dispositif, en particulier pour des cadres de support, pour relier mutuellement un montant (11) qui présente des ouvertures conformées (22, 23) et au moins deux, première et deuxième traverses (12, 13) convergeant au niveau de celui-ci avec une première et respectivement une deuxième extrémité (20, 21) de celles-ci, le dispositif comprenant un élément fileté (26) et un élément fileté femelle (25), **caractérisé en ce qu'**il comprend en outre des moyens de connexion (30, 31) du type fileté, lesdites ouvertures conformées (22, 23) présentant une forme qui est complémentaire à la forme transversale desdites au moins deux, première et deuxième traverses (12, 13) pour permettre l'insertion à travers celles-ci desdites première et deuxième traverses (12, 13) de sorte que leurs première et deuxième extrémités respectives (20, 21) sont insérées et comprises dans ledit montant (11) en agencement croisé et superposé, ledit élément fileté femelle (25) étant prévu au niveau de ladite deuxième extrémité (21) de ladite deuxième traverse (13) agencée dans une position inférieure pour la fixation dudit élément fileté (26), ladite première extrémité (20) de ladite première traverse (12), qui est agencée supérieurement, étant munie d'un trou passant (27) pour la tige (26a) dudit élément fileté (26) qui est adapté pour verrouiller ladite première extrémité (20) à ladite deuxième extrémité (21), chacune desdites extrémités (20, 21) étant à tour de rôle fixées, au moyen desdits moyens de connexion du type fileté (30, 31), à une partie latérale adjacente (28) du montant (11).

2. Dispositif selon la revendication 1, **caractérisé en ce que** lesdits moyens de connexion filetés sont constitués, pour chacune des extrémités (20, 21) des traverses (12, 13), par une vis (30) qui passe à travers un trou frontal correspondant (31, 32) dont l'axe se trouve transversal à la fois à l'axe longitudinal du montant (11) et à l'axe longitudinal de la traverse (12, 13), à laquelle l'extrémité (20, 21) appartient, un premier trou (31) sur ladite partie (28) du montant et un deuxième trou (32) sur l'extrémité (20, 21) à fixer, ladite vis (30) étant adaptée pour être vissée à un élément fileté femelle supplémentaire (33), qui est fixé à l'intérieur de l'extrémité (20, 21) au niveau dudit deuxième trou (32).

3. Dispositif selon la revendication 2, **caractérisé en ce que** ledit élément fileté femelle supplémentaire est constitué par un insert (33) fileté intérieurement, qui est forcé dans le trou respectif (32), présente une section transversale hexagonale, et est déformé plastiquement au niveau de rabats externes de celui-ci pour la fixation stable audit trou (32).

4. Dispositif selon une ou plusieurs des revendications précédentes, **caractérisé en ce que** ladite première extrémité (20) et ladite deuxième extrémité (21) sont insérées à l'intérieur dudit montant (11) jusqu'à ce que la pointe bute contre une paroi interne (29) dudit montant (11).

5. Dispositif selon une ou plusieurs des revendications précédentes, **caractérisé en ce que** ledit élément fileté (26) est une vis.

6. Dispositif selon une ou plusieurs des revendications précédentes, **caractérisé en ce que** ledit montant tubulaire (11) présente une section transversale sensiblement carrée.

7. Dispositif selon une ou plusieurs des revendications précédentes, **caractérisé en ce que** lesdites traverses (12, 13, 14, 15, 16, 17, 18, 19) sont tubulaires.

8. Dispositif selon la revendication 7, **caractérisé en ce que** lesdites traverses tubulaires (12, 13, 14, 15, 16, 17, 18, 19) présentent une section transversale carrée dont le côté est plus court que le côté de la section transversale du montant (11).

9. Dispositif selon une ou plusieurs des revendications précédentes, **caractérisé en ce que** ledit élément fileté femelle (25) est constitué par un manchon fileté intérieurement, qui est soudé à l'intérieur de ladite deuxième extrémité (21), ladite deuxième extrémité (21) présentant un trou (24) pour ledit élément fileté (26), permettant l'accès audit élément fileté femelle (25) qui se trouve en face de ladite première extrémité subjacente (20).

10. Cadre de support, du type constitué par quatre montants tubulaires (11) qui reposent sur le sol et qui sont mutuellement reliés par une première série de traverses supérieures (12, 13, 14, 15) et par au moins une deuxième série de traverses inférieures (16, 17, 18, 19), **caractérisé en ce que** les extrémités desdites traverses (12, 13, 14, 15, 16, 17, 18, 19) sont fixées en paires auxdits montants (11) au moyen de dispositifs de connexion correspondants (10) selon une ou plusieurs des revendications précédentes.
